(19) Europäisches Patentamt
European Patent Office
Office européen des brevets

(11) **EP 3 739 416 A1**

(12) **EUROPEAN PATENT APPLICATION**
published in accordance with Art. 153(4) EPC

(43) Date of publication:
**18.11.2020 Bulletin 2020/47**

(51) Int Cl.:
***G05D 1/02*** *(2020.01)*

(21) Application number: **18906014.8**

(86) International application number:
**PCT/JP2018/005234**

(22) Date of filing: **15.02.2018**

(87) International publication number:
**WO 2019/159278 (22.08.2019 Gazette 2019/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **HONDA MOTOR CO., LTD.**
**Minato-ku**
**Tokyo 107-8556 (JP)**

(72) Inventor: **MURO, Keiji**
**Wako-shi, Saitama 351-0193 (JP)**

(74) Representative: **Beder, Jens**
**Mitscherlich PartmbB**
**Patent- und Rechtsanwälte**
**Sonnenstraße 33**
**80331 München (DE)**

(54) **WORK MACHINE**

(57) A working machine including a traveling unit, characterized by comprising a detecting unit configured to detect a direction of a landmark in a work area with respect to a direction of travel of the working machine, and a calculation unit configured to specify a relative position of the working machine to the landmark based on a detection result by the detecting unit.

# FIG. 1

**Description**

TECHNICAL FIELD

The present invention mainly relates to a self-traveling working machine.

BACKGROUND ART

PTL 1 describes the structure of a lawn mower as a self-traveling/unmanned-traveling working machine. This working machine automatically performs a work (lawn mowing) in a work area. According to PTL 1, the work area is defined by an area wire that generates an electromagnetic wave. The working machine specifies the work area by detecting the electromagnetic wave from the area wire, and performs a work in the work area.

CITATION LIST

PATENT LITERATURE

PTL 1: Japanese Patent No. 5828776

SUMMARY OF INVENTION

TECHNICAL PROBLEM

According to PTL 1, since the area wire used by the working machine to specify the work area needs to be laid on the ground in advance, a more simple arrangement is demanded.
It is an object of the present invention to implement specifying of a work area by a working machine by a relatively simple method.

SOLUTION TO PROBLEM

According to the first aspect of the present invention, there is provided a working machine including a traveling unit, characterized by comprising a detecting unit configured to detect a direction of a landmark in a work area with respect to a direction of travel of the working machine, and a calculation unit configured to specify a relative position of the working machine to the landmark based on a detection result by the detecting unit.

ADVANTAGEOUS EFFECTS OF INVENTION

According to the present invention, a working machine can specify a work area.

BRIEF DESCRIPTION OF DRAWINGS

Fig. 1 is a block diagram for explaining an arrangement example of a working machine;
Fig. 2 is a view for explaining an example of a work form of the working machine;
Fig. 3A is a view for explaining an example of a landmark detection method by the working machine;
Fig. 3B is a view for explaining an example of a landmark detection method by the working machine;
Fig. 4 is a view for explaining an example of a method of specifying the relative position of the working machine to a landmark;
Fig. 5 is a view for explaining an example of a method of specifying the relative position of the working machine to a landmark;
Fig. 6 is a view for explaining an example of a method of specifying the relative position of the working machine to a landmark;
Fig. 7 is a view for explaining an example of a method of specifying the relative position of the working machine to a landmark; and
Fig. 8 is a flowchart showing an example of a self-position specifying method and a work method by the working machine.

DESCRIPTION OF EMBODIMENTS

An embodiment of the present invention will now be described with reference to the accompanying drawings. Note that the drawings are schematic views showing a structure or an arrangement according to the embodiment, and the dimensions of members shown in the drawings do not necessarily reflect real dimensions. The same reference numerals denote the same elements in the drawing, and a description of repetitive contents will be omitted in this specification.

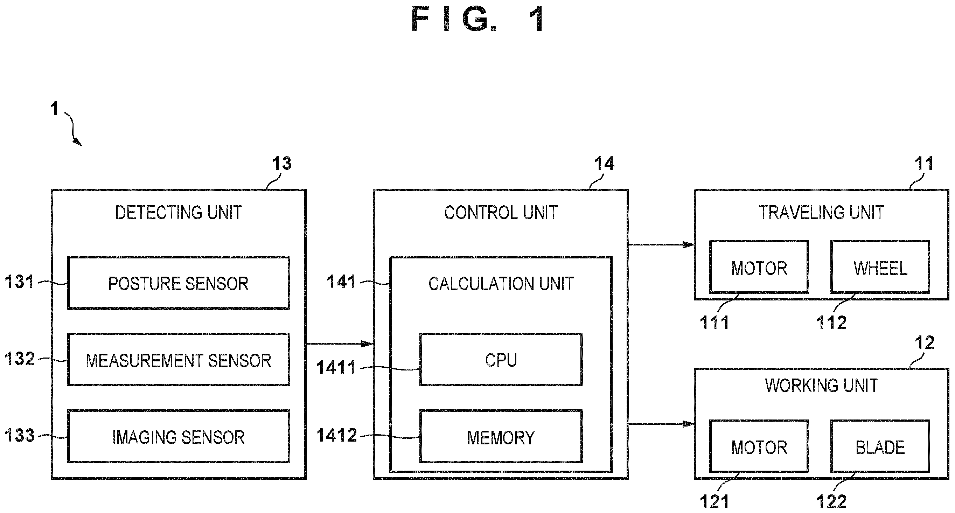

Fig. 1 is a block diagram showing an example of the system arrangement of a working machine 1 according to the embodiment. The working machine 1 includes a traveling unit 11, a working unit 12, a detecting unit 13, and a control unit 14. The working machine 1 is a lawn mower in this embodiment. As another embodiment, it may be a snowplow, or may be an agricultural work vehicle such as a cultivator.

The traveling unit 11 includes mechanisms configured to implement traveling of the working machine 1 such as advance, retreat, and turn and, in this embodiment, includes a motor 111 and wheels 112 arranged under the vehicle body (the body portion of the working machine 1). With this arrangement, the working machine 1 can travel as a self-traveling type. More specifically, the working machine 1 travels by driving the wheels 112 by the motor 111. For example, the wheels 112 are arranged on the left and right sides. The motor 111 rotates them in the forward direction in driving amounts equal to each other to make the working machine 1 move straight forward, and generates a difference between the driving amounts to make the working machine 1 turn.

The working unit 12 includes mechanisms configured to perform lawn mowing as a work and, in this embodiment, includes a motor 121 and a blade 122. Lawn mowing is performed by driving the blade 122 by the motor 121.

The detecting unit 13 includes mechanisms configured to detect information needed for a work and, in this embodiment, includes a posture sensor 131, a measurement sensor 132, and an imaging sensor 133. The posture sensor 131 can detect the posture of the vehicle body, and detects the variation amount of the posture of the vehicle body during traveling using, for example, a gyro sensor, a G sensor, an IMU (Inertial Measurement Unit), and the like. The measurement sensor 132 performs measurement needed for a work, and measures a traveling distance by the traveling unit 11 using, for example, a pulse sensor. The imaging sensor 133 can monitor a peripheral environment needed for a work, and detects an object such as an obstacle existing on the periphery of the vehicle body using, for example, a camera including a CCD/CMOS image sensor.

The control unit 14 includes a calculation unit 141, and performs signal processing for controlling the traveling unit 11 and the working unit 12 based on, for example, a detection result of the detecting unit 13, as will be described later in detail. In this embodiment, the calculation unit 141 is an ECU (Electronic Control Unit) including, for example, a CPU 1411 and a memory 1412. The function of the calculation unit 141 may be implemented by hardware or software.

With the above-described arrangement, the working machine 1 executes a work in a work area based on a predetermined control sequence. However, the arrangement of the working machine 1 is not limited to the above-described arrangement, and a variety of changes can be made in accordance with a purpose or the like. For example, the detecting unit 13 can further include a battery sensor capable of measuring the remaining amount of a battery incorporated in the vehicle body. In addition, for example, the control unit 14 can further include an external interface unit capable of receiving a command input by a user (the owner of the working machine 1) using a remote controller or a portable terminal.

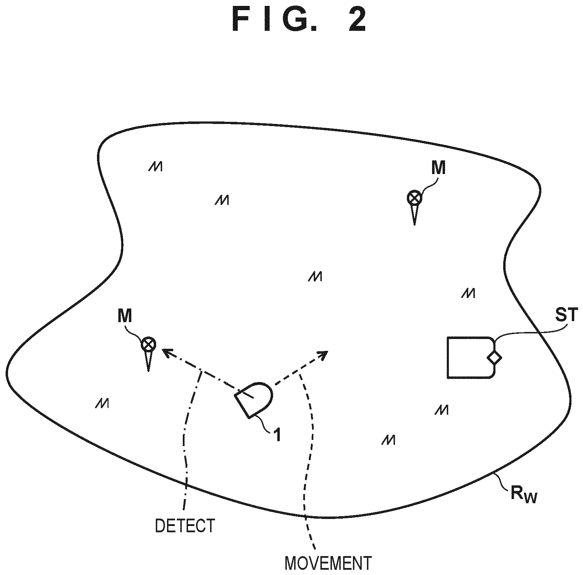

Fig. 2 is a schematic view for explaining a work form of the working machine 1 in a predetermined work area $R_W$. Landmarks M are installed in the work area $R_W$. The imaging sensor 133 detects the landmarks M, whereby the calculation unit 141 specifies the self-position of the vehicle body in the work area $R_W$, as will be described later in detail.

As the landmark M, a predetermined object (for example, a pole) serving as a mark in the work area $R_W$ is used. The landmark M is preferably provided with a structural feature that allows the imaging sensor 133 to visually specify from which direction the landmark M is detected. For example, a predetermined pattern may be formed, or a predetermined exterior may be provided.

In this embodiment, two landmarks M are installed. However, the number of landmarks is not limited to this. For example, if the work area $R_W$ is relatively narrow, the number of landmarks M may be one. If the work area $R_W$ is relatively wide, the number of landmarks M is two or more. If two or more landmarks M are installed, these are configured to be discriminately detectable by the imaging sensor 133.

Note that in this embodiment, the landmarks M are installed in the work area $R_W$. The landmarks need only be installed at such positions that they can be detected by the working machine 1 during a work in the work area $R_W$ by the imaging sensor 133. Hence, the landmarks M may be installed outside the work area $R_W$.

In addition, a charge station ST is installed in the work area Rw. If the work in the work area Rw is completed, or the remaining amount of the battery has become smaller than a reference value, the working machine 1 returns to the charge station ST. As information representing the position of the charge station ST in the work area Rw, information representing the relative position of the charge station ST to each landmark M can be registered in the control unit 14 (for example, the memory 1412) in advance. The working machine 1 detects the landmarks M while referring to the information, thereby returning to the charge station ST.

Note that the above-described working machine 1, the landmarks M, and the charge station ST may collectively be expressed as a "working system".

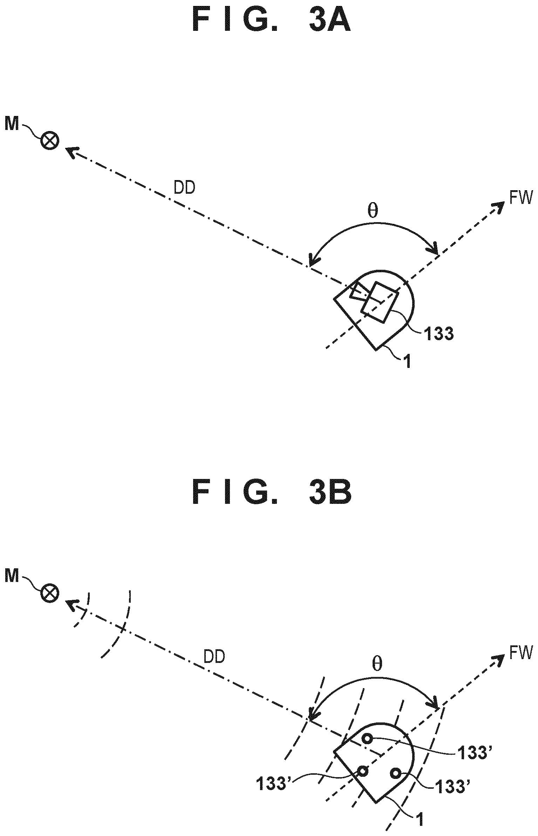

Fig. 3A is a schematic view for explaining an example of a detection form of the landmark M by the working machine 1 that is traveling in the work area Rw. In this embodiment, the working machine 1 travels in the work area Rw while making a camera serving as the imaging sensor 133 pivot or rotate with respect to the vehicle body, and measures an angle $\theta$ made by a detection direction DD of the landmark M and a direction of travel FW of the working machine 1. That is, the angle $\theta$ indicates the direction of the landmark M based on the direction of travel FW of the working machine 1.

The measuring direction of the angle $\theta$ is not limited to the above-described example. For example, as another embodiment, as shown in Fig. 3B, a beacon capable of generating an electromagnetic wave may be used as the landmark M. In this case, the detecting unit 13 preferably includes an electromagnetic wave sensor 133' in place of the imaging sensor 133. Two or more electromagnetic wave sensors 133' are preferably provided to specify the direction of the landmark M that is an electromagnetic wave generation source. In the example shown in Fig. 3B, three electromagnetic wave sensors 133' are provided.

As still another embodiment, the landmark M may be configured to be able to generate a sound wave. In this case, the detecting unit 13 preferably includes a microphone capable of specifying the direction of the landmark M that is a sound source, for example, an omnidirectional microphone in place of the imaging sensor 133. As the sound wave, for example, an ultrasonic wave having a frequency of 20 kHz or more can suitably be used. However, a sound wave in an audible band (20 Hz to 20 kHz) may be used.

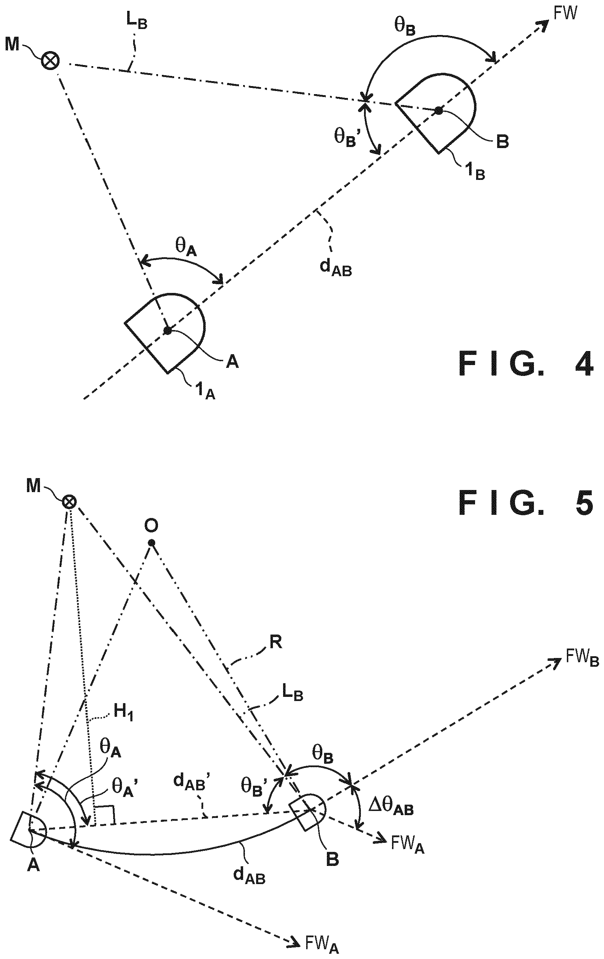

Fig. 4 is a schematic view for explaining an example of a method of specifying the self-position with respect to the landmark M by the working machine 1 that is traveling in the work area $R_W$. The self-position indicates the relative position of the working machine 1 to the landmark M, and represents, for example, a state in which direction and how far the working machine 1 is located apart from the landmark M. A reference direction that allows the working machine to specify, for example, north, south, east, and west may be set on the landmark M. Note that the position will sometimes simply be expressed as "self-position" in the following description. However, the position may be expressed not as the self-position but as a self-machine position or the like.

As described above (see Fig. 3A), the imaging sensor 133 detects the landmarks M, whereby the working machine 1 can measure the angle $\theta$ while defining the direction of travel FW of the working machine 1 as the direction of the landmark M serving as a reference. For example, if the landmark M is detected when the working machine 1 is passing through a point A, an angle $\theta_A$ is acquired as the direction of the landmark M at that time. After that, if the landmark M is detected when the working machine 1 is continuously traveling and passing through a point B, an angle $\theta_B$ is acquired as the direction of the landmark M at that time. In addition, a traveling distance $d_{AB}$ during traveling of the working machine 1 from the point A to the point B is acquired by the measurement sensor 132.

Here, when an angle ($\theta_B$ in Fig. 4) made by the direction of the landmark M with respect to the point B and the direction of the point A with respect to the point B is expressed as $\angle MBA$, it can be expressed as $\angle MBA$ (= $\theta_B'$) = $\pi$ - $\theta_B$. Note that $\pi$ [radian] = 180 [°]. In addition, the shape of a triangle MAB formed by the landmark M, the point A, and the point B can be specified by the parameters $\theta_A$, $\theta_B'$, and $d_{AB}$. Hence, when passing through the point B, the working machine 1 can specify, by the calculation unit 141, the self-position with respect to the landmark M, that is, a distance (B-M distance) $L_B$ from the point B to the landmark M based on the parameters $\theta_A$, $\theta_B$, and $d_{AB}$.

The example of Fig. 4 assumes a case in which the working machine 1 ideally travels straight from the point A to the point B. In reality, since the distance $d_{AB}$ may have a value different from the actual value because of the traveling environment, an error may occur in the calculation result of the distance $L_B$. Examples of the traveling environment are the presence/absence of existence of undulation in the work area Rw and the presence/absence of existence of an obstacle (sand, pebbles, or the like) on the work area Rw.

An example of the method of specifying the self-position with respect to the landmark M in consideration of the above-described error will be described with reference to Fig. 5. In this example, the calculation unit 141 makes, by the traveling unit 11, the working machine 1 turn and travel from the point A to the point B such that the traveling path draws an arc in a planar view (at a viewpoint in the vertical direction with respect to the ground surface).

At the point A, the direction of the landmark M based on a direction of travel $FW_A$ is obtained as the angle $\theta_A$ by the imaging sensor 133. At the point B, the direction of the landmark M based on a direction of travel $FW_B$ is obtained as the angle $\theta_B$ by the imaging sensor 133. The traveling distance during movement from the point A to the point B is obtained as the distance $d_{AB}$ by the measurement sensor 132. The change amount of the direction of travel during movement from the point A to the point B is obtained as a change amount $\Delta\theta_{AB}$ by the posture sensor 131.

Details of the self-position specifying method are as follows:

- first, the angles $\theta_A$ and $\theta_B$, the traveling distance $d_{AB}$, and the change amount $\Delta\theta_{AB}$ of the direction of travel are acquired, as described above;
- next, based on the change amount $\Delta\theta_{AB}$ and the traveling distance $d_{AB}$, a turn radius R from the point A to the point B is calculated by

$$R \approx d_{AB}/\Delta\theta_{AB} \qquad ...(1);$$

- after that, based on the change amount $\Delta\theta_{AB}$ and the radius R, a linear distance $d_{AB}'$ from the point A to the point B is calculated by

$$dAB' = 2 \times R \times \sin(\Delta\theta_{AB}/2) \qquad ...(2);$$

- then, based on the angles $\theta_A$ and $\theta_B$ and the change amount $\Delta\theta_{AB}$, an angle $\theta_A'$ ($\angle MAB$) and an angle $\theta_B'$ ($\angle MBA$) are calculated by

$$\theta_A' = \theta_A - \Delta\theta_{AB}/2$$

$$\theta_B' = \pi - \theta_B - \Delta\theta_{AB}/2 \qquad ...(3);$$

- after that, based on the angles $\theta_A'$ and $\theta_B'$ and the linear distance $d_{AB}'$, a height $H_1$ of the triangle MAB with respect to a base AB is calculated by

$$H_1 = d_{AB}' \times \tan\theta_A' \times \tan\theta_B'/(\tan\theta_A' + \tan\theta_B') \qquad ...(4);$$

- hence, based on the height $H_1$ and the angle $\theta_B'$, the B-M distance $L_B$ is calculated by

$$L_B = H_1/\sin\theta_B' \qquad ...(5).$$

That is, when moving from a given point (point A) to another point (point B), if the distance (distance $d_{AB}$) of the movement is specified, the self-position (distance $L_B$) after the movement can be calculated based on the detection direction of the landmark M during the movement. More specifically, the self-position (distance $L_B$) after the movement can be calculated based on the traveling distance (distance $d_{AB}$) by the movement, the direction ($\theta_A$) of the landmark M before the movement, the direction ($\theta_B$) of the landmark M after the movement, and additionally, the variation amount ($\Delta\theta_{AB}$) of the direction of travel.

Note that the example of Fig. 5 assumes that the calculation unit 141 makes the working machine 1 travel such that the traveling path forms an arc. However, the traveling path need not always have an arc shape, and may be straight. In this case as well, since the change amount $\Delta\theta_{AB}$ ($\neq 0$) is substantially generated due to the traveling environment, the value of the radius R becomes relatively large, but calculation itself of the distance $L_B$ is possible.

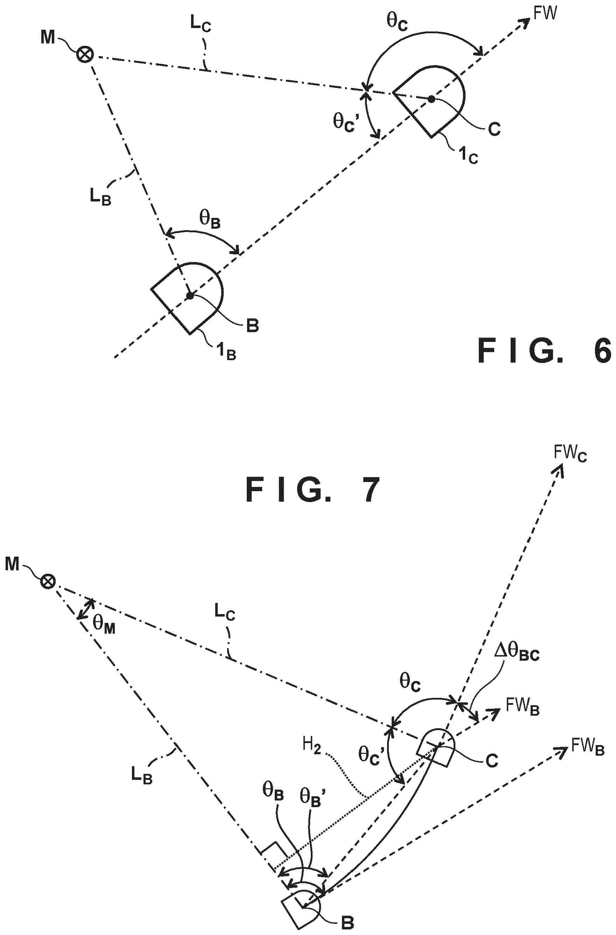

Fig. 6 is a schematic view for explaining another example of the method of specifying the self-position with respect to the landmark M by the working machine 1 that is traveling in the work area $R_W$. Assume that in this example, the working machine 1 travels from the point B to a point C, following the example of Fig. 4, and ideally travels straight as in the example of Fig. 4. In this example, the landmark M is detected when the working machine 1 is passing through the point C, and an angle $\theta_C$ is acquired as the direction of the landmark M at that time. Note that the angle $\theta_B$ and the distance $L_B$ have already been acquired in the example of Fig. 4.

When an angle ($\theta_C'$ in Fig. 6) made by the direction of the landmark M with respect to the point C and the direction of the point B with respect to the point C is expressed as $\angle MCB$, it can be expressed as $\angle MBC$ (= $\theta_C'$) = $\pi - \theta_C$. In addition, a triangle MBC formed by the landmark M, the point B, and the point C can be specified by the parameters $\theta_B$, $\theta_C'$, and $L_B$. Hence, when passing through the point C, the working machine 1 can specify, by the calculation unit 141, the self-position with respect to the landmark M, that is, a distance (C-M distance) Lc from the point C to the landmark M based on the parameters $\theta_B$, $\theta_C$, and $L_B$.

The example of Fig. 6 also assumes a case in which the working machine 1 ideally travels straight from the point B to the point C. However, as in the example of Fig. 4, an error may occur in the calculation result of the distance $L_C$ because of the traveling environment.

An example of the method of specifying the self-position with respect to the landmark M in consideration of the above-described error will be described with reference to Fig. 7. In this example, assume that the working machine moves from the point B to the point C, and the traveling path need not always have an arc shape, and may be almost straight.

At the point C, the direction of the landmark M based on a direction of travel FWc is obtained as the angle $\theta_C$ by the imaging sensor 133. The change amount of the direction of travel during movement from the point B to the point C is obtained as a change amount $\Delta\theta_{BC}$ by the posture sensor 131. Note that the angle $\theta_B$ and the distance $L_B$ have already been acquired (see Fig. 5).

Details of the self-position specifying method are as follows:

- first, the angles $\theta_B$ and $\theta_C$ and the change amount $\Delta\theta_{BC}$ are acquired, as described above;
- next, based on the angles $\theta_B$ and $\theta_C$ and the change amount $\Delta\theta_{BC}$, an angle $\theta_B'$ ($\angle MBC$) and an angle $\theta_C'$ ($\angle MCB$) are calculated by

$$\theta_B' = \theta_B - \Delta\theta_{BC}/2$$

$$\theta_C' = \pi - \theta_C - \Delta\theta_{BC}/2 \qquad ...(6);$$

- after that, based on the angles $\theta_B'$ and $\theta_C'$, an angle $\theta_{M'}$ ($\angle BMC$) is calculated by

$$\theta_M = \pi - \theta_B' - \theta_C' \qquad ...(7);$$

- then, based on the angles $\theta_B'$ and $\theta_M$ and the distance $L_B$, a height $H_2$ of the triangle MBC with respect to a base MB is calculated by

$$H_2 = L_B \times \tan\theta_B' \times \tan\theta_M/(\tan\theta_B' + \tan\theta_M) \qquad ...(8);$$

- hence, based on the height $H_2$ and the angle $\theta_M$, the C-M distance $L_C$ is calculated by

$$L_C = H_2/\sin\theta_M \qquad ...(9).$$

That is, when moving from a given point (point B) to another point (point C), if the self-position (distance $L_B$) before movement has already been specified, the self-position (distance $L_C$) after the movement can be calculated based on the detection direction of the landmark M during the movement. More specifically, the self-position (distance $L_C$) after the movement can be calculated based on the self-position (distance $L_B$) before the movement, the direction ($\theta_B$) of the landmark M before the movement, the direction ($\theta_C$) of the landmark M after the movement, and additionally, the variation amount ($\Delta\theta_{AB}$) of the direction of travel.

Since the working machine 1 generally travels at a relatively low speed (for example, several ten [cm/sec]), slip or the like never occurs during traveling of the working machine 1, and the self-position can be specified by the above-described calculation at a relatively high accuracy. On the other hand, if the distance between the working machine 1 and the landmark M is too long, the calculation accuracy may lower. Hence, the calculation timing (how to decide the point B in the example of Fig. 5, and how to decide the point C in the example of Fig. 7) may be set based on the scale of the work area $R_W$, for example, the maximum value of the distance between the working machine 1 and the landmark M.

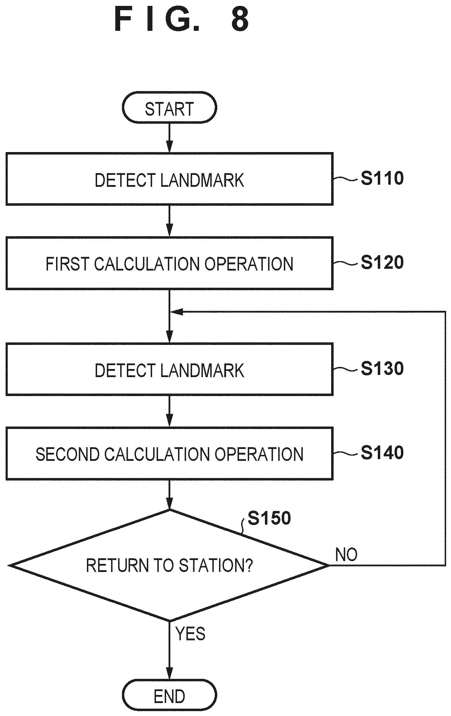

Fig. 8 is a flowchart for explaining a work execution method using the self-position specifying method. The contents of the flowchart are mainly performed by (the calculation unit 141 of) the control unit 14. As for the outline of the flowchart, the self-position in the work area $R_W$ is specified based on detection of the landmark M, the traveling path is decided based on the result, and a work in the work area $R_W$ is executed in accordance with the traveling path. If a predetermined condition such as work completion is satisfied, the working machine 1 returns to the charge station ST.

First, in accordance with detection of the landmark M in step S110 (to be referred to as "S110" hereinafter, and this will apply to the other steps as well), in S120, the self-position is calculated by the method described with reference to Figs. 4 and 5 (first calculation operation). That is, the working machine 1 is made to travel along an arc-shaped path, and the self-position of the working machine 1 after the movement is specified based on the detection directions of the landmark M before and after the movement and the traveling distance of the working machine 1. After that, the traveling path in the work area Rw is decided based on the specified self-position, and a work is performed while making the working machine 1 travel along the traveling path.

After that, in accordance with detection of the landmark M in step S130, in S140, the self-position is calculated by the method described with reference to Figs. 6 and 7 (second calculation operation). That is, the working machine 1 is made to travel in a predetermined direction, and the self-position of the working machine 1 after the movement is specified based on the self-position already specified in S120 and the detection directions of the landmark M before and after the movement. After that, decision of the traveling path in the work area $R_W$ and the work in the work area Rw are continued based on the specified self-position.

In S150, it is determined whether a predetermined condition to return to the charge station ST is satisfied. For example, if the work by the working machine 1 in the work area $R_W$ is completed, it is decided to return to the charge station ST. Alternatively, if the remaining amount of the battery of the working machine 1 has become smaller than a reference value, it is decided to stop the work and return to the charge station ST. The reference value of the remaining amount of the battery need only be set to a value that allows the working machine to return from any position in the work area Rw to the charge station ST.

On the other hand, if the condition to return to the charge station ST is not satisfied, the process returns to S130 to continue the work in the work area $R_W$ while calculating the self-position. Here, in S140, the self-position after the movement can be specified as a new self-position based on the already specified self-position (past self-position) and the detection directions of the landmark M before and after the movement. In other words, the self-position specified in certain S140 can be used for calculation when specifying the self-position in next S140. Hence, when returning to S130 to continue the work based on the determination in S150, in next S140, the new self-position of the working machine 1 after the movement can be specified based on the self-position specified in preceding S140 and the detection directions of the landmark M before and after the movement.

In the above-described flowchart, the step of making the working machine 1 travel along the arc-shaped path and specifying the self-position of the working machine 1 (S120) is performed only the first time, and after that, specifying the self-position after the movement based on the specified self-position (S140) is performed. Since the data processing amount by the calculation unit 141 in S140 is smaller than that in S120, the data processing amount needed to calculate the self-position can be suppressed. However, if the predetermined condition is satisfied, S120 may be executed again. For example, S120 is executed again in a case in which a predetermined time has elapsed, in a case in which the number of times of execution of S140 has reached a predetermined value, or in a case in which turn is performed at a turning angle equal to or more than a predetermined angle.

As described above, according to this embodiment, the working machine 1 can specify the self-position in the work area $R_W$ by the calculation unit 141 using a relatively simple method, and can appropriately implement the work in the work area $R_W$. This can be implemented by installing the predetermined landmark M in/near the work area Rw. Hence, it is possible to install the working system at a relatively low cost and reduce the burden on the user.

Note that in this embodiment, an object serving as a mark is installed as the landmark M in the work area $R_W$. As another example, an already installed structure (a building or the like) or natural object (a tree or the like) may be used as the landmark M.

The summary of the above-described embodiment will be described below.

According to the first aspect, there is provided a working machine (for example, 1) including a traveling unit (for example, 11), comprising a detecting unit (for example, 13, 133) configured to detect a direction of a landmark (for example, M) in a work area (for example, $R_W$) with respect to a direction of travel of the working machine, and a calculation unit (for example, 141) configured to specify a relative position of the working machine to the landmark based on a detection result by the detecting unit.

According to the first aspect, the working machine can specify the self-position (that is, the relative position of the working machine to the landmark) in the work area using a relatively simple method, and can appropriately implement a work such as lawn mowing or snow removing in the work area. Additionally, according to the first aspect, since the user can install the landmark with small man-hours, it is advantageous in reducing the cost.

In the second aspect, the calculation unit specifies the relative position of the working machine further based on a change amount (for example, $\Delta\theta_{AB}$) of the direction of travel during traveling.

According to the second aspect, even if undulation or the like exists in the work area, the working machine can specify the self-position at a relatively high accuracy.

In the third aspect, the calculation unit decides a traveling path of the working machine based on the specified relative position of the working machine.

According to the third aspect, the working machine can decide, based on the specified self-position, how to execute the work in the work area and can therefore appropriately decide the traveling path of the working machine.

In the fourth aspect, the calculation unit detects, by the detecting unit, the direction (for example, $\theta_A$) of the landmark with respect to the direction of travel of the working machine when the working machine is located at a first point (for example, A) in the work area, and the direction (for example, $\theta_B$) of the landmark with respect to the direction of travel of the working machine when the working machine is located at a second point (for example, B) different from the first point in the work area, and specifies a distance (for example, $L_B$) from the second point to the landmark based on the directions of the landmark at the first point and the second point, which are detected by the detecting unit, a traveling distance (for example, $d_{AB}$) by the traveling unit during a time until the working machine moves from the first point to the second point, and the change amount (for example, $\Delta\theta_{AB}$) of the direction of travel of the working machine during a time in which the working machine is moving from the first point to the second point.

According to the fourth aspect, even if undulation or the like exists in the work area, the working machine can specify the self-position at a higher accuracy.

In the fifth aspect, when the working machine moves from the first point to the second point, the calculation unit drives the traveling unit such that the traveling path of the working machine draws an arc in a planar view.

According to the fifth aspect, it is possible to appropriately specify the distance between the landmark and the working machine.

In the sixth aspect, the working machine further comprises a posture sensor (for example, 131) configured to measure a posture of the working machine.

According to the sixth aspect, the change amount of the direction of travel during the traveling of the working machine can be measured, and the distance between the landmark and the working machine can appropriately be specified using the measurement result.

In the seventh aspect, the working machine further comprises a measurement sensor (for example, 132) configured to measure the traveling distance of the working machine by the traveling unit.

According to the seventh aspect, the distance between the landmark and the working machine can appropriately be specified using the traveling distance of the working machine.

In the eighth aspect, the calculation unit detects, by the detecting unit, the direction (for example, $\theta_B$) of the landmark with respect to the direction of travel of the working machine when the working machine is located at the second point (for example, B) in the work area, and the direction (for example, $\theta_C$) of the landmark with respect to the direction of travel of the working machine when the working machine is located at a third point (for example, C) different from the second point in the work area, and specifies a distance (for example, $L_C$) from the third point to the landmark based on the directions of the landmark at the second point and the third point, which are detected by the detecting unit, the change amount (for example, $\Delta\theta_{BC}$) of the direction of travel of the working machine during a time in which the working machine is moving from the second point to the third point, and the distance (for example, $L_B$) from the second point to the landmark.

According to the eighth aspect, even if undulation or the like exists in the work area, the working machine can specify the self-position at a higher accuracy.

In the ninth aspect, at least two landmarks are provided in the work area, and the detecting unit is configured to be able to discriminately detect the at least two landmarks.

According to the ninth aspect, the working machine can perform a work in a relatively wide work area.

In the 10th aspect, the detecting unit includes an imaging sensor (for example, 133).

According to the 10th aspect, the working machine can specify the self-position by a relatively simple arrangement using a known imaging sensor such as a camera including a CCD/CMOS image sensor.

In the 11th aspect, the landmark generates an electromagnetic wave, and the detecting unit includes a sensor (for example, 133') configured to be able to detect the electromagnetic wave.

According to the 11th aspect, the working machine can specify the self-position by a relatively simple arrangement.

In the 12th aspect, the landmark comprises a beacon.

According to the 12th aspect, the user can install the landmark in the work area or near the work area with relatively small man-hours.

In the 13th aspect, the landmark generates a sound wave, and the detecting unit includes a microphone.

According to the 13th aspect, the user can install the landmark in the work area or near the work area with relatively small man-hours.

The present invention is not limited to the above embodiments, and various changes and modifications can be made within the spirit and scope of the present invention. Therefore, to apprise the public of the scope of the present invention, the following claims are made.

**Claims**

**1.** A working machine including a traveling unit, **characterized by** comprising:

a detecting unit configured to detect a direction of a landmark in a work area with respect to a direction of travel of the working machine; and
a calculation unit configured to specify a relative position of the working machine to the landmark based on a detection result by the detecting unit.

2. The working machine according to claim 1, **characterized in that** the calculation unit specifies the relative position of the working machine further based on a change amount of the direction of travel during traveling.

3. The working machine according to claim 1 or 2, **characterized in that** the calculation unit decides a traveling path of the working machine based on the specified relative position of the working machine.

4. The working machine according to any one of claims 1 to 3, **characterized in that** the calculation unit detects, by the detecting unit,
the direction of the landmark with respect to the direction of travel of the working machine when the working machine is located at a first point in the work area, and
the direction of the landmark with respect to the direction of travel of the working machine when the working machine is located at a second point different from the first point in the work area, and
specifies a distance from the second point to the landmark based on
the directions of the landmark at the first point and the second point, which are detected by the detecting unit,
a traveling distance by the traveling unit during a time until the working machine moves from the first point to the second point, and
the change amount of the direction of travel of the working machine during a time in which the working machine is moving from the first point to the second point.

5. The working machine according to claim 4, **characterized in that** when the working machine moves from the first point to the second point, the calculation unit drives the traveling unit such that the traveling path of the working machine draws an arc in a planar view.

6. The working machine according to claim 4 or 5, **characterized by** further comprising a posture sensor configured to measure a posture of the working machine.

7. The working machine according to any one of claims 4 to 6, **characterized by** further comprising a measurement sensor configured to measure the traveling distance of the working machine by the traveling unit.

8. The working machine according to any one of claims 1 to 7, **characterized in that** the calculation unit detects, by the detecting unit,
the direction of the landmark with respect to the direction of travel of the working machine when the working machine is located at a second point in the work area, and
the direction of the landmark with respect to the direction of travel of the working machine when the working machine is located at a third point different from the second point in the work area, and
specifies a distance from the third point to the landmark based on
the directions of the landmark at the second point and the third point, which are detected by the detecting unit,
the change amount of the direction of travel of the working machine during a time in which the working machine is moving from the second point to the third point, and
the distance from the second point to the landmark.

9. The working machine according to any one of claims 1 to 8, **characterized in that** at least two landmarks are provided in the work area, and
the detecting unit is configured to be able to discriminately detect the at least two landmarks.

10. The working machine according to any one of claims 1 to 9, **characterized in that** the detecting unit includes an imaging sensor.

11. The working machine according to any one of claims 1 to 10, **characterized in that** the landmark generates an electromagnetic wave, and the detecting unit includes a sensor configured to be able to detect the electromagnetic wave.

12. The working machine according to claim 11, **characterized in that** the landmark comprises a beacon.

13. The working machine according to any one of claims 1 to 10, **characterized in that** the landmark generates a sound wave, and the detecting unit includes a microphone.

# FIG. 1

**1**

**13** DETECTING UNIT

**131** POSTURE SENSOR

**132** MEASUREMENT SENSOR

**133** IMAGING SENSOR

**14** CONTROL UNIT

**141** CALCULATION UNIT

**1411** CPU

**1412** MEMORY

**11** TRAVELING UNIT

**111** MOTOR

**112** WHEEL

**12** WORKING UNIT

**121** MOTOR

**122** BLADE

EP 3 739 416 A1

# F I G. 2

M

M

M

M

M

M

M

M

M

M

ST

$R_W$

1

DETECT

MOVEMENT

# F I G. 3A

# F I G. 3B

FIG. 4

FIG. 5

F I G. 6

F I G. 7

# F I G.  8

```
        ┌──────────┐
        │  START   │
        └────┬─────┘
             │
   ┌─────────▼──────────┐
   │  DETECT LANDMARK   │──S110
   └─────────┬──────────┘
             │
   ┌─────────▼──────────────────┐
   │ FIRST CALCULATION OPERATION│──S120
   └─────────┬──────────────────┘
             │
   ┌─────────▼──────────┐
   │  DETECT LANDMARK   │──S130
   └─────────┬──────────┘
             │
   ┌─────────▼──────────────────────┐
   │ SECOND CALCULATION OPERATION   │──S140
   └─────────┬──────────────────────┘
             │           S150
        ◇────▼─────────────────◇  NO
        │ RETURN TO STATION?   │────►
        ◇──────────┬───────────◇
                   │ YES
              ┌────▼─────┐
              │   END    │
              └──────────┘
```

## INTERNATIONAL SEARCH REPORT

| | International application No. |
|---|---|
| | PCT/JP2018/005234 |

**A. CLASSIFICATION OF SUBJECT MATTER**
Int.Cl. G05D1/02(2006.01)i

According to International Patent Classification (IPC) or to both national classification and IPC

**B. FIELDS SEARCHED**

Minimum documentation searched (classification system followed by classification symbols)
Int.Cl. G05D1/02

Documentation searched other than minimum documentation to the extent that such documents are included in the fields searched

| | | |
|---|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-168058 A (HONDA MOTOR CO., LTD.) 21 | 1, 9-10 |
| Y | September 2017, paragraphs [0019]-[0066], fig. 1-8 | 3, 11-13 |
| A | & US 2017/0269604 A1, paragraphs [0028]-[0079], fig. 1-8 & EP 3223101 A1 | 2, 4-8 |
| Y | JP 2000-132229 A (HITACHI ZOSEN CORPORATION) 12 May 2000, paragraph [0023], fig. 3 (Family: none) | 3 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09.03.2018 | 20.03.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/005234

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2017-520057 A (HUSQVARNA AB) 20 July 2017, paragraph [0011], fig. 1 & US 2017/0108872 A1, paragraph [0017], fig. 1 & WO 2015/192902 A1 | 11-12 |
| Y | JP 2015-1863 A (RICOH CO., LTD.) 05 January 2015, paragraph [0050] (Family: none) | 13 |
| A | JP 5-189033 A (TATSUMI DENSHI KOGYO KK) 30 July 1993, paragraphs [0010]-[0014], fig. 1 (Family: none) | 1-13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5828776 B